# EUROPÄISCHE PATENTANMELDUNG

(11) **EP 2 489 488 A1**
(43) Veröffentlichungstag der Anmeldung: **22.08.2012**
(21) Anmeldenummer: 12154375.5
(22) Anmeldetag: 08.02.2012
(51) Int. Cl.: B28D 1/04, B23B 49/00, B23B 51/04

(54) **Diamantlochsäge mit Zentrierbohrer und Anschlag**

(30) Priorität: 21.02.2011 DE 102011000844
(71) Anmelder: wolfcraft GmbH, 56746 Kempenich (DE)
(72) Erfinder: Ebert, Winfried, 56745 Weibern (DE)
(74) Vertreter: Grundmann, Dirk

(57) **Zusammenfassung**

Die Erfindung betrifft eine Vorrichtung zum Fertigen von Löchern in Werkstücke (10) aus hartem Material, wie beispielsweise Keramik, Glas oder Stein mit einem Halter (1) zur Kopplung mit einem Drehantrieb, einem mit dem Halter (1) verbundenen glocken-, kronen- oder becherartigen Fräswerkzeug (2), dessen in einer Arbeitsebene (E) verlaufender Rand (3) mit spanabhebenden Mitteln versehen ist, und mit einem in der Drehachse (Z) des Fräswerkzeuges (2) angeordneten Bohrer (4), dessen Spitze zum Bohren einer Zentrierbohrung (6) die Arbeitsebene (E) um eine Strecke (a) überragt und dessen Schaft (7) mit dem Halter (1) verbunden ist. Um unerwünschte Materialbrüche im Werkstück zu vermeiden, wird ein insbesondere dem Schaft (7) des Bohrers (4) zugeordneter Anschlag (8) vorgeschlagen, der vom Rand (3) um eine Strecke (b) überragt wird und der nach dem Fräsen eines Pilotkreises (9) mit den spanabhebenden Mitteln des Randes (3) gegen das Werkstück (10) anschlägt, um ein Vertiefen des Pilotkreises (9) erst nach Trennen des Bohrers (4) vom Halter (1) zu ermöglichen.

## Beschreibung

Die Erfindung betrifft eine Vorrichtung zum Fertigen von Löchern in Werkstücke aus hartem Material, wie beispielsweise Keramik, Glas oder Stein mit einem Halter zur Kopplung mit einem Drehantrieb, einem mit dem Halter verbundenen glocken-, kronen- oder becherartigen Fräswerkzeug, dessen in einer Arbeitsebene verlaufender Rand mit spanabhebenden Mitteln versehen ist, und mit einem in der Zentrumslinie des Fräswerkzeuges angeordneten Bohrer, dessen Spitze zum Bohren einer Zentrierbohrung die Arbeitsebene um eine Strecke überragt und dessen Schaft mit dem Halter verbunden ist. Die Vorrichtung ist zum Sägen von Löchern in harten Fliesen, Marmor- oder Granitplatten, Steinzeug, insbesondere feinem Steinzeug, aber auch Beton, insbesondere Betonplatten, Glas geeignet.

Eine Vorrichtung der gattungsgemäßen Art wird von der DE 44 26 238 A1 beschrieben. Die dort beschriebene Vorrichtung besitzt einen Halter in Form eines Sechskantabschnittes, der in ein Spannfutter einer Bohrmaschine eingespannt werden kann. Der Halter setzt sich fort als Bohrerschaft, der an seinem freien Ende eine Spitze aufweist, die spanabhebend zur Bohrung einer Zentrierbohrung in ein Werkstück eingebracht werden kann. Das Fräswerkzeug besteht aus einem becherförmigen Körper, dessen Becherboden im Zentrum mit dem Halter verbunden ist. Am Rand der Wandung des Bechers sind Reibstoffpartikel angebracht, die spanabhebend in Wirkung treten können, um einen kreisförmigen Schlitz um die Zentrierbohrung in das Werkstück zu fräsen. Während eines Ausfräsens einer Kernbohrung tritt der in der Drehachse liegende Zentrierbohrer immer tiefer in das Werkstück ein. Beim Bohren von Keramikfliesen oder anderen aus einem harten Werkstoff bestehenden Werkstücken kann es wegen der Punktbelastung im Zentrum zum Bruch des Werkstücks kommen.

Eine ebenfalls gattungsgemäße Vorrichtung wird von der WO 2005/120 754 beschrieben. Auch dort besitzt der Halter einen Mehrkantabschnitt zum Einspannen in ein Bohrfutter einer Handbohrmaschine. Über einen Adapter ist der Halter mit einem topfförmigen Fräswerkzeug verbunden, das an seinem Rand spanabhebende Mittel in Form einer Sägeverzahnung aufweist. In der Zentrumslinie des Fräswerkzeugs erstreckt sich ein Bohrer zum Bohrer einer Zentrierbohrung.

Ein ähnliches Werkzeug beschreibt die DE 698 26 014 T2. Auch hier hat das Fräswerkzeug eine glocken-, kronen- oder becherartige Form und trägt in ihrer Mitte einen in der Drehachse ausgerichteten Bohrer.

Der Erfindung liegt die Aufgabe zugrunde, Maßnahmen anzugeben, mit denen unerwünschte Materialbrüche vermieden werden können.

Gelöst wird die Aufgabe durch einen insbesondere dem Schaft des Bohrers zugeordneten Anschlag, der bezogen auf die Spitze des Bohrers um eine Strecke b rückwärtig der Arbeitsebene liegt. Der Rand des Fräsers, also dessen spanabhebende Mittel überragen somit den Anschlag. Mit der so weitergebildeten Vorrichtung lässt sich zunächst eine Zentrierbohrung bohren. Dies kann insbesondere bei Verwendung eines Schnellwechselfutters zunächst auch ohne am Halter befestigten Fräswerkzeug erfolgen. Bevorzugt erfolgt die Initialbohrung der Zentrierbohrung aber mit vollständigem Werkzeug, also mit über den Rand ragender Spitze des Bohrers. Sobald der Bohrer eine Eindringtiefe in das Werkstück erreicht hat, die der Überragungsstrecke der Spitze gegenüber dem Rand des Fräswerkzeuges entspricht, treten die spanabhebenden Mittel des Randes in spanabhebende Wirkung. Es wird ein Pilotkreis in die Werkstückoberfläche eingefräst, der um die Zentrierbohrung zentriert ist. Nach dem Fräsen des Pilotkreises von geringer Tiefe schlägt der Anschlag gegen das Werkstück an, um ein Vertiefen des Pilotkreises erst nach Entfernen des Bohrers zu ermöglichen.

Hierzu ist der Bohrer lösbar am Halter bzw. am Fräswerkzeug bspw. mittels eines Futters befestigt. Die lösbaren Verbindung zwischen Bohrer und Halter bzw. Fräswerkzeug kann von einer Klemmverbindung oder einem Schnellwechselfutter realisiert sein. In einer besonders bevorzugten Ausgestaltung werden die spanabhebenden Mittel am Rand des Fräswerkzeuges von einer Reibstoffbeschichtung des Randes und insbesondere dessen Stirnfläche ausgebildet. Es kann sich dabei um Hartstoffpartikel, beispielsweise um Bornitridpartikel oder um Diamanten handeln, die in einer galvanischen Einfassung am Rand befestigt sind. Der Rand kann aber auch selbst von einem ringförmigen Reibkörper gebildet sein. Bei dem Bohrer kann es sich um einen Glasbohrer handeln. Dieser besitzt eine Spitze und zumindest zwei von der Spitze ausgehende schräg oder in einem Bogen verlaufende Schneiden. Der Abstand a, um den die Spitze des Bohrers den Rand überragt und/oder der Abstand b, um den der Rand den Anschlag überragt, beträgt vorzugsweise 1 bis 5 mm. Der Anschlag ist bevorzugt dem Bohrer zugeordnet. Es kann sich bei dem Anschlag um den Rand einer Hülse handeln, die auf den Schaft des Bohrers aufgepresst ist. Die Spitze des Bohrers kann von einer Hartmetallplatte ausgebildet sein, die mit dem Schaft verlötet ist. Die Hartmetallplatte kann dabei in einen stirnseitigen Schlitz des Schaftes eingesetzt sein, so dass ein Abschnitt der Stirnseite des Schaftes den Anschlag ausbildet. Das Schnellwechselfutter kann eine Betätigungshülse aufweisen, mit der Verriegelungsmittel durch Verschieben der Betätigungshülse von einer Fesselungsstellung in eine Freigabestellung verlagert werden. In der Freigabestellung kann der Bohrer aus einer Bohreraufnahmehöhlung des Futters herausgezogen werden. Der Bohrer steckt ansonsten gegen einen Anschlag anliegend in der Bohreraufnahmehöhlung. Das Fräswerkzeug kann mit einem Halsabschnitt, der beispielsweise von einem Adapter ausgebildet ist, in einer durchmessergrößeren Höhlung des Halters gefesselt sein. Auch hier ist eine Entnahme nach Verlagerung der Betätigungshülse möglich. Bevorzugt besitzt der Hals bzw. Adapter eine zentrale Öffnung, die vom Bohrer durchragt wird. In einer weiteren Ausgestaltung der Erfindung ist vorgesehen, dass sich ein Futter im Inneren der Höhlung des Fräswerkzeuges befindet. In einer Bohreraufnahmehöhlung des Futters steckt der Schaft des Bohrers. Zur Zentrierung kann das rückwärtige Stirnende des Schaftes einen durchmesserabgesetzten Zentrierfortsatz aufweisen, der in einem durchmesserverminderten Abschnitt der Bohreraufnahmehöhlung steckt. Die dabei entstehende Schulter stützt sich an einer Anschlagschulter innerhalb der Bohreraufnahmehöhlung ab. Des Weiteren kann vorgesehen sein, dass der lösbar im Halter angeordnete Schaft eine Einstecköffnung für einen 25 mm-Bit aufweist. Der Boden der Einstecköffnung kann einen Magneten aufweisen. Der 25 mm-Bit bildet an seiner Spitze den Bohrer aus. Dieser kann von einer Hartmetallplatte gebildet sein, die in einem Schlitz steckt. Der Anschlag kann von einem insbesondere mit Fenstern versehenen Ring gebildet sein, der dem Futter zugeordnet ist und der drehbar den Bohrer mit einem Abstand umgibt. Es kann ebenfalls vorgesehen sein, dass der Schaft des Bohrers mittels einer Klemmschraube am Halter lösbar fixiert ist. Auch hier ist vorgesehen, dass das Stirnende des Schaftes einen Zentrierfortsatz ausbildet, der in einem durchmesserangepassten Zentrierhöhlungsabschnitt der Bohreraufnahmehöhlung steckt.

Ausführungsbeispiele der Erfindung werden nachfolgend anhand beigefügter Zeichnungen erläutert. Es zeigen:
- Fig. 1: in einer perspektivischen und teilweise aufgebrochenen Darstellung ein erstes Ausführungsbeispiel der Erfindung;
- Fig. 2: den Schnitt der Linie gemäß II-II in Figur 1;
- Fig. 3: den Schnitt der Linie gemäß III-III in Figur 2;
- Fig. 4: am Beispiel des ersten Ausführungsbeispiels den ersten Bearbeitungsschritt, in dem ggf. mit entferntem Fräswerkzeug 2 eine Zentrierbohrung 6 in ein Werkstück 10 gebohrt wird;
- Fig. 5: den zweiten Bearbeitungsschritt, bei dem unter Vertiefung 6 der Zentrierbohrung ein Pilotkreis 9 in das Werkstück 10 gefräst wird, bis ein Anschlag 8 gegen das Werkstück 10 tritt;
- Fig. 6: den dritten Bearbeitungsschritt, wobei nach einer Trennung des Bohrers vom Halter 1 der Pilotkreis 9 vertieft wird, bis ein Bohrkern ausgesägt ist;
- Fig. 7: einen Schnitt durch ein zweites Ausführungsbeispiel der Erfindung;
- Fig. 8: einen Schnitt durch ein drittes Ausführungsbeispiel der Erfindung;
- Fig. 9: einen ersten Schnitt durch ein viertes Ausführungsbeispiel;
- Fig. 10: den Schnitt gemäß der Linie X-X der Figur 9;
- Fig. 11: einen ersten Schnitt durch ein fünftes Ausführungsbeispiel der Erfindung;
- Fig. 12: einen Schnitt gemäß der Linie XII-XII der Figur 11.

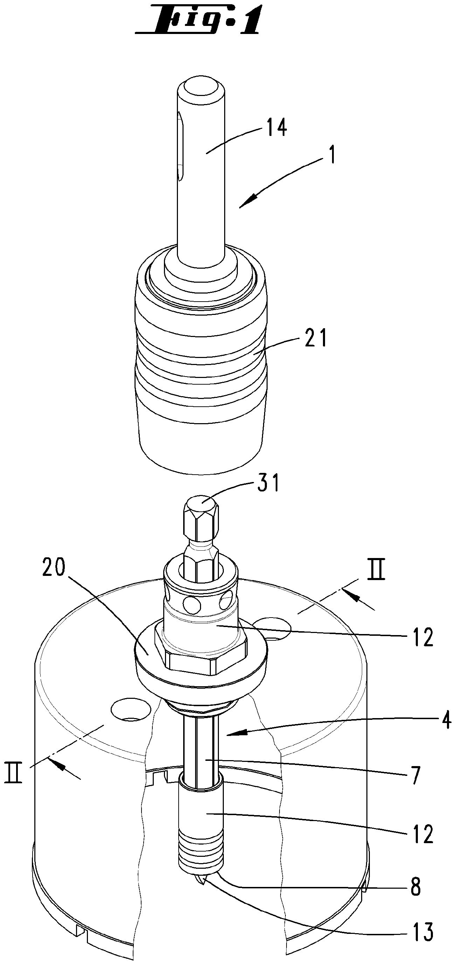

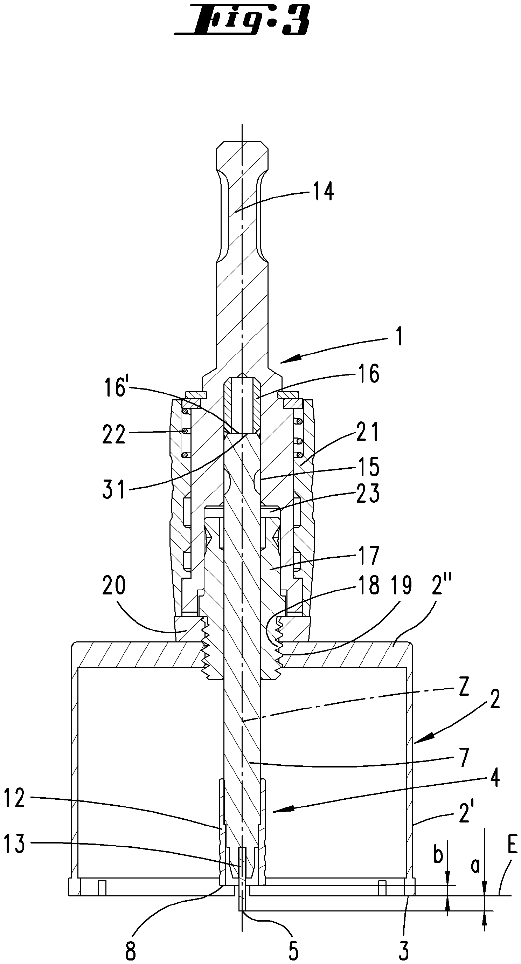

Das in den Figuren 1 bis 3 dargestellte Ausführungsbeispiel besteht aus einem Halter 1, einem mit dem Halter 1 verbundenen Fräswerkzeug 2 und einem mit dem Halter 1 verbundenen Bohrer 4. Der Halter 1 besitzt einen Einspannabschnitt 14 zum Einspannen in ein Bohrfutter einer Bohrmaschine. An dem Einspannabschnitt 14 schließt sich ein Aufnahmeabschnitt an, der eine innere, in der Drehachse liegende Bohrung aufweist. Es handelt sich dabei um eine Bohreraufnahmehöhlung 15, die im Bereich ihres Bodens ein Distanzstück 16 ausbildet, welches mit seinem Rand 16' einen Anschlag für eine Anschlagschulter 31 des Bohrerschaftes 7 ausbildet. Die Anschlagschulter 31 wird hier von der rückwärtigen Stirnseite des Schaftes 7 ausgebildet. Der Schaft 7 des Bohrers 4 steckt derart in der Bohreraufnahmehöhlung 15 ein, dass die Spitze 5 innerhalb der mit der Drehachse zusammenfallenden Zentrumslinie Z liegt.

Die Spitze 5 wird von einem Hartmetalleinsatz 13 ausgebildet, der sich an die Spitze 5 anschließende Schneiden 11 ausbildet. Die Schneiden 11 verlaufen auf einer gekrümmten Linie, die sich schräg zur Zentrumslinie Z erstreckt. Im Bereich des Schlitzes, in dem der Hartmetalleinsatz 13 steckt ist der Schaft 7 und ein Bereich des Hartmetalleinsatzes 13 von einer Hülse 12 umgeben. Die Spitze 5 überragt den Hülsenrand 8 um etwa 2 bis 10 mm. Der Hülsenrand 8 bildet einen Anschlag aus. Die Hülse 12 ist auf den Schaft 7 aufgepresst.

An die Bohreraufnahmehöhlung 15 schließt sich eine durchmesservergrößerte Höhlung 23 an, in die ein von einem Adapter 17 gebildeter Hals Aufnahme findet. Dieser Hals dient zur Befestigung des Fräswerkzeuges 2 am Halter 1.

Der Adapter 17 besitzt ein Außengewinde 18, welches in ein Innengewinde 19 einer Bodenplatte 2' des Fräswerkzeuges 2 eingeschraubt ist. Zur Drehsicherung ist eine Kontermutter 20 vorgesehen.

An den Rand der kreisrunden Bodenplatte 2" schließt sich materialeinheitlich oder aber auch materialgetrennt ein Wandungsabschnitt 2' an. Es wird so ein becherförmiges Fräswerkzeug ausgebildet. Der Becherrand 3 ist mit einer Hartstoffbeschichtung versehen bzw. weist einen Hartstoff beinhaltenden Ringrand auf. Es kann sich hierbei um eine galvanische Beschichtung mit in der Galvanikschicht eingebrachten Diamantsplittern oder anderweitigen Hartstoffteilchen handeln. Der Rand besitzt eine Vielzahl von im Wesentlichen in gleichmäßiger Umfangsverteilung angeordneten Unterbrechungen.

Der Halteabschnitt des Halters 1 trägt an seiner Außenseite eine Schiebehülse 21, die von einer Druckfeder 22 in einer Verriegelungsstellung gehalten wird, in der nicht dargestellte Verriegelungsmittel die Entnahme des Bohrers 4 bzw. die Entnahme des Fräswerkzeuges 2 verhindern. Wird die Schiebehülse 21 gegen die Rückstellkraft der Druckfeder 22 in eine nicht dargestellte Freigabestellung verlagert, so werden die nicht dargestellten Verriegelungsmittel, bei denen es sich um Rastkugeln oder dergleichen handeln kann, freigegeben, so dass der Bohrer 4 bzw. das Fräswerkzeug 2 entnommen werden kann.

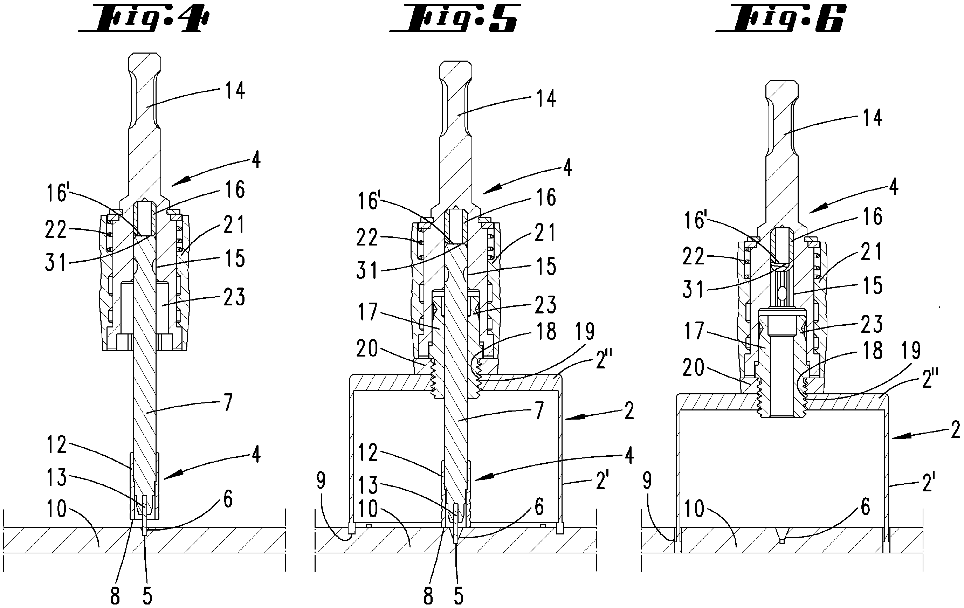

Die Funktionsweise der erfindungsgemäßen Vorrichtung wird anhand des ersten Ausführungsbeispiel und der Figuren 4 bis 6 nachfolgend erläutert.

In dem in Figur 1 dargestellten ersten Verfahrensschritt wird im Zentrum der zu fertigenden Kernbohrung eine Zentrierbohrung 6 gebohrt. Dies erfolgt mittels der Spitze 5 des Bohrers 4, der im Halter 1 eingesteckt ist. Wie aus der Figur 4 zu entnehmen ist, braucht hierbei das Fräswerkzeug 2 nicht mit dem Halter 1 verbunden zu sein.

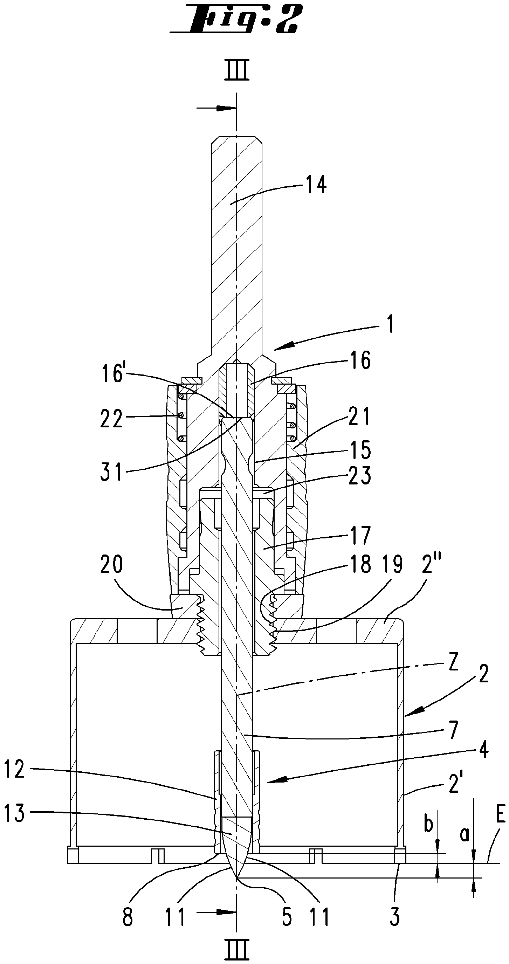

In dem zweiten, in der Figur 5 dargestellten Verfahrensschritt ist das Fräswerkzeug 2 mit dem Halter 1 verbunden. In diesem Zustand überragt die Spitze 5 des Bohrers 4 den Rand 3 um das Abstandsmaß a (siehe Figur 2). Besitzt die Zentrierbohrung 6 eine dem Abstandsmaß a entsprechende Tiefe, so liegt der Rand 3 auf der Oberfläche des Werkstücks 10 auf. Die Hartstoffbeschichtung des Randes 3 kann jetzt einen Pilotkreis in die Oberfläche des Werkstücks 10 fräsen.

Aus der Figur 2 ist ferner zu erkennen, dass der einen Anschlag 8 ausbildende Rand der Hülse 12 um eine Strecke b rückwärtig des Randes 3 verläuft. Dies hat zur Folge, dass der Pilotkreis 9 nur die Tiefe des Abstandsmaßes b erreichen kann, wie dies in der Figur 5 dargestellt ist.

Um die Kernbohrung zu vervollständigen, muss der Bohrer 4 aus dem Halter 1 herausgenommen werden, was durch Zurückziehen der Schiebehülse 21 möglich gemacht wird. In diesem Zustand, der in der Figur 6 dargestellt ist, kann die Kernbohrung vervollständigt werden.

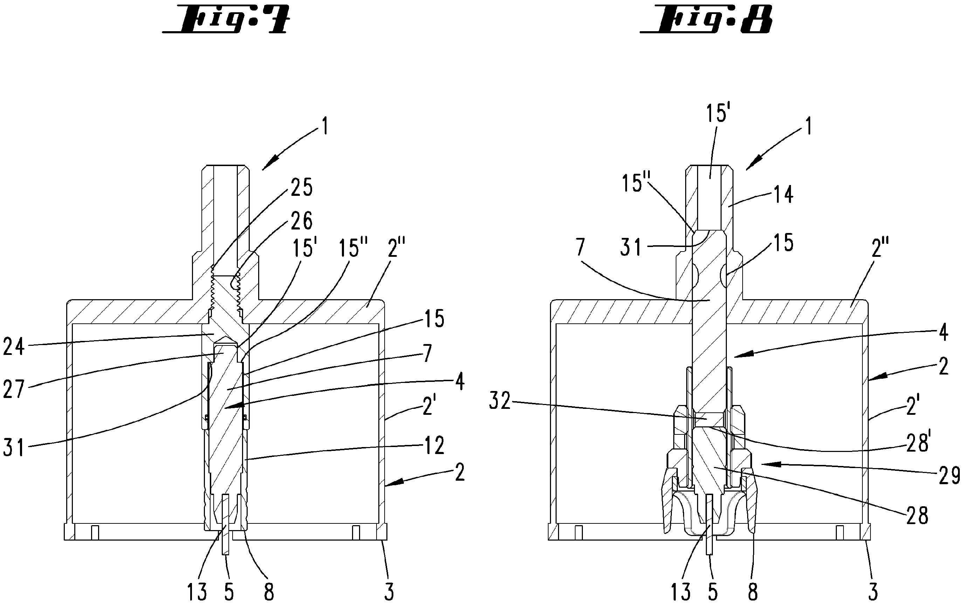

Die Figur 7 zeigt ein zweites Ausführungsbeispiel der Erfindung. Hier ist der Halter 1 materialeinheitlich mit dem Fräswerkzeug 2 verbunden. Der Halter 1 besitzt eine zentrale Bohrung, die bereichsweise ein Innengewinde 25 ausbildet, in das von der Fräswerkzeughöhlung her ein Futter 24 mit einem Außengewinde 26 eingeschraubt ist. Das Futter 26 bildet die Bohreraufnahmehöhlung 15 aus, die gestuft ausgebildet ist. Der Bodenbereich der Bohreraufnahmehöhlung 15 besitzt einen durchmesserverminderten Zentrierabschnitt 15', so dass sich eine ringförmige Anschlagstufe 15" ausbildet.

Der Schaft 7 des Bohrers 4 besitzt an seinem rückwärtigen Ende einen Zentrierfortsatz 27, dessen Durchmesser dem Durchmesser des Zentrierabschnitts 15' der Bohreraufnahmehöhlung 15 angepasst ist. Dort besitzt der Schaft 7 auch eine ringförmige Stufe 31, die in einer Anlagestellung an der Anschlagstufe 15" anliegt. Der Schaft 7 wird reibschlüssig, kraft- oder formschlüssig oder mittels Klebstoff in der Bohreraufnahmehöhlung 15 sowohl gegen ein Herausziehen als auch gegen Drehen gehalten und bildet auch bei diesem Ausführungsbeispiel den Anschlag 8 durch einen Rand einer Hülse 12 aus.

Bei dem in der Figur 8 dargestellten dritten Ausführungsbeispiel ist der lösbar mit dem Halter 1 verbundene Bohrer 4 aus einem Schnellwechselfutter mit einem Magneten 23 und einem kurzschaftigem Bohrerbit zusammengesetzt. Der Bohrerbit besitzt einen Bitschaft 28 mit einem Schlitz, in dem der Hartmetalleinsatz 13 eingesetzt und dort befestigt ist. Die axiale Länge des Bohrerbits beträgt 25 mm.

Der den Bohrerbit aufnehmende Schnellwechselhalter bildet einen Schaft 7 aus, der in einer Bohreraufnahmehöhlung 15 des Halters 1 steckt. Auch hier bildet das Ende des Schaftes 7 eine Anschlagschulter 31, die an einem Anschlag 15" anliegt. Der Bohrerbit wird lediglich durch den Magneten 32 in einer Aufnahmehöhlung gehalten. Insofern bildet der Magnet 32 ebenfalls einen Anschlag, an dem eine Stirnfläche 28' des Bitschaftes 28 anliegt.

Das derart ausgebildete Bitfutter 29 besitzt einen Anschlagring, der mit seinem unterbrochenem Rand den Anschlag 8 ausbildet. Der Ring ist drehbar dem Bitfutter 29 zugeordnet.

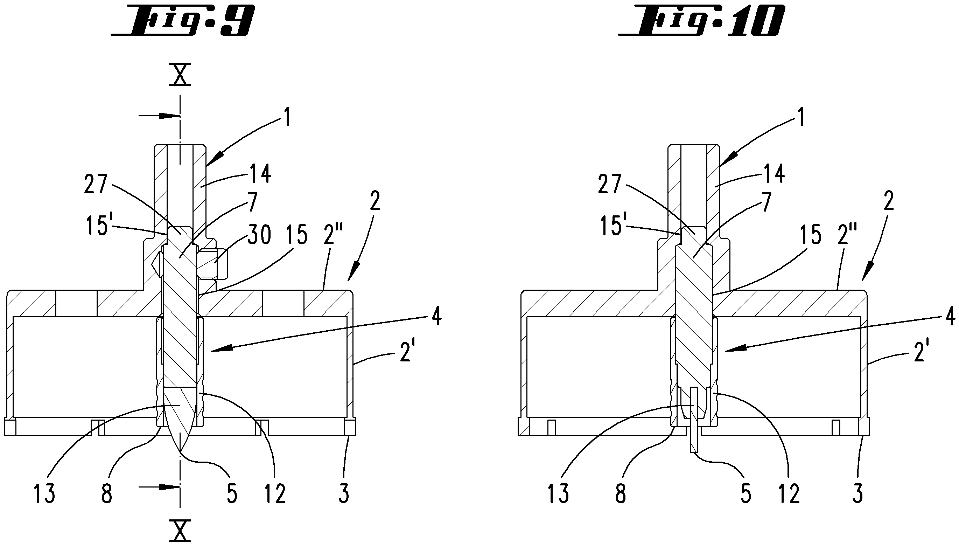

Bei dem in den Figuren 9 und 10 dargestellten vierten Ausführungsbeispiel besitzt der Schaft 7 des Bohrers 4 an seinem rückwärtigen Ende ebenfalls einen Zentrierfortsatz 27, der in einem Zentrierabschnitt 15' der Bohreraufnahmehöhlung 15 einliegt, so dass sich eine Stufe des Schaftes 7 in einer Anlagestellung befindet. Die lösbare Befestigung des Schaftes 7 innerhalb der Bohreraufnahmehöhlung 15 erfolgt hier mittels einer Klemmschraube 30, die in einer Radial-öffnung eingeschraubt ist und deren Spitze eine Radialkraft auf den Schaft 7 ausübt.

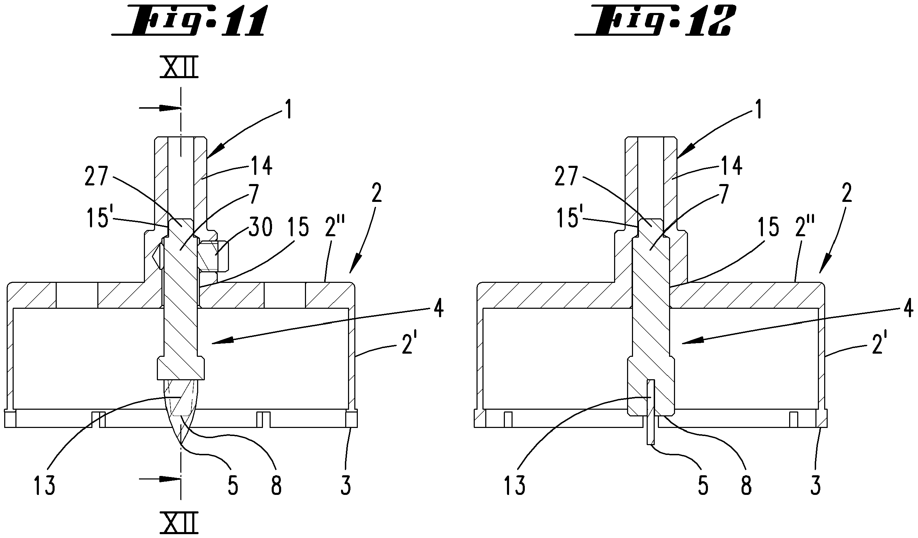

Das in den Figuren 11 und 12 dargestellte fünfte Ausführungsbeispiel zeigt eine Variante eines Anschlags 8. Hier wird der Anschlag 8 von der spitzenseitigen Stirnfläche des Schaftes 7 ausgebildet. Diese Stirnfläche bildet den besagten Schlitz aus, in dem der Schneideneinsatz 13 befestigt ist.

Bei allen Ausführungsbeispielen sind die Anschläge derart an die Länge des Bohrers 4 angepasst, dass die Spitze des Bohrers 5 den Rand 3 des Fräswerkzeuges um einen Abstand a überragt, der zwischen 1 und 5 mm liegt. Der Anschlag 8 ist dabei so angeordnet, dass er um das Maß b, welches ebenfalls 1 bis 5 mm betragen kann, rückwärtig des Randes 3 liegt.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren in ihrer fakultativ nebengeordneten Fassung eigenständige erfinderische Weiterbildung des Standes der Technik, insbesondere um auf Basis dieser Ansprüche Teilanmeldungen vorzunehmen.

### Bezugszeichenliste

| | | | | | |
|---|---|---|---|---|---|
| 1 | Halter | | | | |
| 2 | Fräswerkzeug | 2' | Umfangswand | 2" | Boden |
| 3 | Rand | | | | |
| 4 | Bohrer | | | | |
| 5 | Spitze | | | | |
| 6 | Zentrierbohrung | | | | |
| 7 | Schaft | | | | |
| 8 | Anschlag | | | | |
| 9 | Pilotkreis | | | | |
| 10 | Werkstück | | | | |
| 11 | Schneide | | | | |
| 12 | Hülse | | | | |
| 13 | Hartmetalleinsatz | | | | |
| 14 | Einspannschaft | | | | |
| 15 | Bohreraufnahmehöhlung | 15' | Zentrierabschnitt | 15" | Höhlung |
| 16 | Distanzstück | 16' | Anschlag | | |
| 17 | Adapter | | | | |
| 18 | Kupplungsabschnitt / Gewinde | | | | |
| 19 | Innengewinde | | | | |
| 20 | Kontermutter | | | | |
| 21 | Schiebehülse | | | | |
| 22 | Druckfeder | | | | |
| 23 | Adapteraufnahmehöhlung | | | | |
| 24 | Futter | | | | |
| 25 | Innengewinde | | | | |
| 26 | Außengewinde | | | | |
| 27 | Zentrierfortsatz | | | | |
| 28 | Bitschaft | | | | |
| 29 | Bitfutter | | | | |
| 30 | Klemmschraube | | | | |
| 31 | Anschlagschulter | | | | |
| 32 | Magnet | | | | |
| | | | | | |
| a | Überragungsstrecke | | | | |
| b | Hinausragungsstrecke | | | | |
| | | | | | |
| E | Arbeitsebene | | | | |
| Z | Zentrumslinie | | | | |

## Patentansprüche

1. Vorrichtung zum Fertigen von Löchern in Werkstücke (10) aus hartem Material, wie beispielsweise Keramik, Glas oder Stein mit einem Halter (1) zur Kopplung mit einem Drehantrieb, einem mit dem Halter (1) verbundenen glocken-, kronen- oder becherartigen Fräswerkzeug (2), dessen in einer Arbeitsebene (E) verlaufender Rand (3) mit spanabhebenden Mitteln versehen ist, und mit einem in der Drehachse (Z) des Fräswerkzeuges (2) angeordneten Bohrer (4), dessen Spitze zum Bohren einer Zentrierbohrung (6) die Arbeitsebene (E) um eine Strecke (a) überragt und dessen Schaft (7) mit dem Halter (1) verbunden ist, **gekennzeichnet durch** einen insbesondere dem Schaft (7) des Bohrers (4) zugeordneten Anschlag (8), der vom Rand (3) um eine Strecke (b) überragt wird und der nach dem Fräsen eines Pilotkreises (9) mit den spanabhebenden Mitteln des Randes (3) gegen das Werkstück (10) anschlägt, um ein Vertiefen des Pilotkreises (9) erst nach Trennen des Bohrers (4) vom Halter (1) zu ermöglichen.

2. Vorrichtung nach Anspruch 1 oder insbesondere danach, **dadurch gekennzeichnet, dass** die spanabhebenden Mittel von einer Reibstoffbeschichtung des Randes (3) ausgebildet sind und der Bohrer (4) ein Glasbohrer mit zumindest zwei von einem Spitzenpunkt (5) ausgehenden schräg oder in einem Bogen zur Arbeitsebene (E) verlaufenden Schneiden (11) ist.

3. Vorrichtung nach einem oder mehreren der vorangehenden Ansprüche oder insbesondere danach, **dadurch gekennzeichnet, dass** der Abstand (a), um den die Spitze (5) den Rand (3) überragt und/oder der Abstand (b) um den der Rand (3) den Anschlag (8) überragt zwischen 1 und 5 mm beträgt.

4. Vorrichtung nach einem oder mehreren der vorangehenden Ansprüche oder insbesondere danach, **dadurch gekennzeichnet, dass** der Anschlag (8) vom Rand einer Hülse (12) gebildet ist, die insbesondere auf den Schaft (7) aufgepresst ist.

5. Vorrichtung nach einem oder mehreren der vorangehenden Ansprüche oder insbesondere danach, **dadurch gekennzeichnet, dass** der Bohrer (4) unabhängig vom Fräswerkzeug (2) am Halter (1) befestigt ist, so dass auch bei nicht am Halter (1) befestigtem Fräswerkzeug (2) die Zentrierbohrung (6) fertigbar ist.

6. Vorrichtung nach einem oder mehreren der vorangehenden Ansprüche oder insbesondere danach, **dadurch gekennzeichnet, dass** der Halter (1) ein Futter, insbesondere ein Schnellwechselfutter aufweist mit einer Bohreraufnahmehöhlung (15), in der der Bohrer (4) in einer Anschlagstellung aufgenommen werden kann und/oder mit einer Aufnahmehöhlung (23) zur Aufnahme eines Adapters (17) oder Befestigungsabschnitt, der mit dem Fräswerkzeug (2) verbunden ist.

7. Vorrichtung nach einem oder mehreren der vorangehenden Ansprüche oder insbesondere danach, **dadurch gekennzeichnet, dass** das Futter (15, 29) zum Einstecken eines Bohrerschaftes (4) in der Höhlung des Fräswerkzeuges (2) angeordnet ist.

8. Vorrichtung nach einem oder mehreren der vorangehenden Ansprüche oder insbesondere danach, **dadurch gekennzeichnet, dass** der Anschlag (8) von einem drehbar dem Schaft (7) oder einem mit dem Schaft (7) verbundenen Futter zugeordneten ringförmigen Körper ausgebildet wird.

9. Vorrichtung nach einem oder mehreren der vorangehenden Ansprüche oder insbesondere danach, **dadurch gekennzeichnet, dass** der Anschlag (8) von einer Stirnfläche des Schaftes (7) ausgebildet ist.

10. Vorrichtung nach einem oder mehreren der vorangehenden Ansprüche oder insbesondere danach, **dadurch gekennzeichnet, dass** der Bohrer ein in einem Futter steckender 25 mm-Bit ist.
